# EUROPEAN PATENT SPECIFICATION

(11) **EP 0 773 285 B1**
(45) Date of publication and mention of the grant of the patent: **18.12.2002**
(21) Application number: 96307761.5
(22) Date of filing: 28.10.1996
(51) Int. Cl.: C12H 1/00, C12N 1/19, C12N 9/02

(54) **Method for producing an alcohol-containing fermented malt beverage with stabilized flavour**
Verfahren zur Herstellung eines alkoholischen Malzgetränkes mit stabilisiertem Geschmack
Procédé de production d'un boisson à base de malt avec arôme stabilisé

(30) Priority: 27.10.1995 US 8015; 25.10.1996 US 738355
(43) Date of publication of application: 14.05.1997
(73) Proprietor: Bravo, Adriana, Caurimare, Caracas (VE); Sánchez, Beatriz, Urbanizacion Los Nuevos Teques (VE); Rangel-Aldao, Rafael, Urb. Los Naranjos, Caracas (VE)
(72) Inventor: Bravo, Adriana, Caurimare, Caracas (VE); Sánchez, Beatriz, Urbanizacion Los Nuevos Teques (VE); Rangel-Aldao, Rafael, Urb. Los Naranjos, Caracas (VE)
(74) Representative: Chapman, Paul William

(56) References cited:
- EP-A- 0 207 039
- LIANG Z Q ET AL: "Aldose reductase from porcine liver metabolizing 3-deoxyglucosone, a Maillard reaction intermediate." BIOSCIENCE, BIOTECHNOLOGY, AND BIOCHEMISTRY, vol. 56, no. 7, 1992, pages 1074-1078, XP002085018 Correspondence (Reprint) address, F. Hayase, Dep. of Agric. Chem., Univ. of Tokyo, Bunkyo-ku, Tokyo 113, Japan
- PATENT ABSTRACTS OF JAPAN vol. 014, no. 208 (C-0714), 27 April 1990 & JP 02 046285 A (RIYOUSHIYOKU KENKYUKAI), 15 February 1990
- PATENT ABSTRACTS OF JAPAN vol. 015, no. 216 (C-0837), 4 June 1991 & JP 03 065173 A (IZUMI ENTERP:KK;OTHERS: 01), 20 March 1991

## Description

### BACKGROUND OF THE INVENTION

### Field of the Invention

The present invention is in the fields of biotechnology and food/beverage manufacturing. The invention relates to the production of malt beverages, and more particularly to the production of malt beverages having improved flavor-stability. In particular, the invention relates to methods and compositions for improving the flavor stability of fermented malt beverages such as beer, and to malt beverages produced by these methods.

### Related Art

### The Brewing Process

*Overview.* In the production of fermented malt beverages such as beer, a warm water extract of barley malt, with or without other unmalted grains such as rice or corn, is boiled with hops, cooled and then subjected to the fermentative action of yeast. The warm water used to extract the malt allows the action of several enzymes in the malt to hydrolyze the starch in the barley (and in the corn or rice) to fermentable sugar, which is acted on by the yeast to produce the alcohol in the fermented malt beverage.

*Malting.* Barley malt is steeped with water to produce steeped out barley which is germinated at a fairly low temperature. Germination is carried out with daily mixing and water addition as needed to maintain the moisture content at about 43%. The resulting green malt contains a high content of beer flavor precursors, beer flavor components, and coloring agents. After germination is complete, the green malt is heated at a high moisture content to generate beer flavor precursors, beer flavor components and also to reduce amylolytic enzyme activity. After heating, the malt is dried to a moisture content of 3.5-5.5% and a soluble protein content of 6.5-8%. The dried malt can then be mashed to produce a wort which is boiled with hops, cooled, pitched with brewers yeast, and processed by conventional brewing processes and in conventional brewing equipment.

*Mashing*. The malt, which may actually be a blend of malts (*i.e*., standard brewer's malt, high color, low amylase malt, *etc.*), is ground and mixed with 2.5 to 4 times its weight of warm water in large tubs and mashed at 35-40° C for 5 to 15 minutes until it forms a thick malt mash. The mash is then permitted to rest for 45-90 minutes without stirring, then heated in steps to 70-73°C while stirring, with time allowed at each step for the various enzymes to convert the starches into fermentable sugars. Following heating, the mash is held for 15-30 minutes, the temperature is raised to 75° C, and the mash is transferred to the lauter unit.

If rice and corn adjuncts are to be used, they are separately cooked and a cooker mash is obtained. Production of the cooker mash involves the use of adjuncts along with a 10%-30% portion of the malt (or the addition of commercial enzymes) in order to convert raw starch into fermentable sugars. The adjuncts and the malt portion are gradually brought to boiling and held there until the products are completely gelatinized. During the final stages of mashing (at the higher temperatures), the cooker mash and the malt mash are combined.

Mashing serves a three-fold purpose. First, it brings into solution those substances of malt (and adjuncts) which are readily soluble in warm water. Second, it permits malt enzymes to act on insoluble substances and render them soluble. Third, it provides a far-reaching enzymatic degradation of starches, proteins and gums into products of smaller size and lower molecular weight.

*Lautering and Sparging*. Lautering consists of the removal of the liquid, now termed the "wort," from the insoluble husks or "spent grains." Lautering begins upon termination of the mashing process, whereby the finished mash is transferred to a lautering tub. There it is allowed to rest for about ten to thirty minutes during which time the spent grains settle to the bottom. The lautering tub is equipped with a false bottom containing numerous perforations and an outlet leading to the true bottom of the tub. The mash is then allowed to settle for 10-20 minutes and run-off begun. The wort is recycled until reasonably clear. The clear wort is then pumped into a brewing kettle. Hot water is run through the spent grains to rinse out, or sparge, any remaining wort.

The lauter temperature is about 72-77° C. for both the bath and sparge water. The amount of sparge water used is about 50-75% of the amount of brewing water.

*Boiling and Hopping of Wort: Primary Fermentation.* The wort is boiled vigorously for one to two and one-half hours in the brew kettle. Hops (or extracts thereof) may be added at various stages of the boiling process, depending on the nature of the final product that is sought.

Wort boiling serves a number of objectives, including (1) concentration of the sparged wort, (2) complete inactivation of enzymes that may have survived the final mashing process, (3) coagulation and precipitation of high-molecular weight proteins and solids (termed "kettle break" or "hot break"), (4) extraction of desirable hop constituents, and (5) sterilization of the wort.

*Cooling, Fermentation and Storage: Maturation.* After boiling, the wort is strained to remove the solids, or "trub", and the wort is then cooled to a temperature of about 12-16°C.

Fermentation is initiated when the wort is pitched with the proper amount of a pure brewer's yeast culture (typically about 12.8-27.5kg/m³(0.7-1.51b/bbl)). After 24 hours, fermentation is established and proceeds at an accelerated rate. Fermentation typically proceeds for about 7 to 10 days. During this period, the wort temperature must be controlled, since the fermentation process causes the temperature of the wort to rise. Once the yeast has metabolized all the fermentable ingredients in the wort, it settles to the bottom and is subsequently recovered and recycled for use in pitching other brews. As the fermentation process comes to a conclusion, the temperature of the wort begins to drop. The fermented wort (termed "green beer") is drawn off for storage in a cold room tank, or "ruh," where, its temperature is lowered to about 0-5°C.

*Processing and Packaging.* The "ruh" beer may be allowed to remain in the ruh tank for completion of the maturation process, or it may be transferred into a separate maturation tank upon further settling of any remaining yeast and other solids. Depending on the particular brewery, the beer is allowed to age from about 14 days to about 3 months. During this period, the beer clarifies and its flavor develops. Upon maturation, the beer generally is filtered to remove the yeasts and other solids.

The beer can undergo a single- or a double-pass filtration process. The double-pass filtration consists of two steps: a primary (coarse) filtration, and a secondary (fine) filtration. Filtered beer is subsequently stored in a finishing tank.

To prepare the beer for consumption, it is carbonated to a specified level. Then, depending on the form of packaging, the beer may be pasteurized. (In the case of the cold-filtered "draft" beers, a microfiltration system is used to remove contaminants, thereby obviating the pasteurization step.) Beer packaged in cans and bottles is usually pasteurized, while beer packaged in kegs (and sometimes bottles) remains unpasteurized. After final processing of the packaged product (e.g. labeling, etc.), the beer is ready for shipment to the consumer.

Other conventional processing steps well known to those skilled in the art may be used instead of, or in addition to, the above-disclosed general brewing methods. For example, the fermented wort can be diluted with water to produce a low calorie (40 or fewer calories per 300 grams (12 ounces)), non-alcoholic malt beverage (less than 0.5 volume percent alcohol) that closely simulates conventional beer flavor, taste and mouthful.

### Flavor

Flavor is a key factor in the quality of a malt beverage such as beer. It is important that a beer retains its original, fresh flavor and character during distribution and storage. Thus, off-flavors are a great problem for beer manufacturers and distributors. The lightstruck flavor is a well known off-flavor formed during the storage of bottled beer, as is the off-flavor caused by contamination with microorganisms. Other off-flavors that are produced during storage are expressed as papery, cardboard-like, oxidized, or in general, stale. At room temperature, the stale flavor in canned or bottled beer begins to develop shortly after packaging, and gradually and continuously increases to the extent that most American manufacturers of beer recall their product from the market if it is more than about 4 months from the packaging date. Although the oxygen in a bottle or can of beer is typically consumed by the beer within 24 hours of packaging, the noticeable presence of a stale flavor generally does not appear for several weeks.

In the past, the stale flavor of oxidized malt beverage, such as beer, generally has been attributed the combined effects of oxidation, light and heat. Primarily investigators (representing over 80% of the prior art) have focussed on methods of reducing oxidation in the finished product. For example, the present practice of delaying the staling of beer includes maintaining a low level of air (or oxygen) in the packaged beer by minimizing free head space. Modern beer-filling machines are designed to achieve very low air levels in the packaged product. Typically, the bottle is evacuated before it is filled with beer, or the air in the evacuated bottle is replaced with carbon dioxide before filling, or overfoaming the bottle is utilized to displace the head space gases with beer foam. All of these practices can produce air levels of less than 0.5 ml. per 360ml (12 oz). bottle. But even these low levels of air still allow beer to oxidize in 2-3 months.

The off flavors are made more obvious when the malt beverage has been stored at elevated temperature (thermal reactions). The negative influence of isohumulones and melanoidins on the oxidation of alcohols at elevated temperatures has been known for many years. See, e.g., Hashimoto, Rept. *Res. Lab. Kirin Brewery Co. Ltd.* 19:1 (1979). However, although beer is ideally stored at cold temperatures, maintaining a uniformly cool temperature is not always possible during transport. This is a particular problem in hot and humid countries where the temperature averages 28-38°C., even more so in those countries where modern refrigeration is not always available. Therefore, there is clearly a need for a reliable method of stabilizing beer flavor, which does not rely upon specifically controlled environmental conditions after the packaged product has left the brewery.

A wide range of carbonyl compounds are known to be reduced during fermentation, particularly from malt and wort, and to produce off-flavors. See Meilgaard *et al., Tech. Q. Master Brew. Assoc. Am.* 12:151-168 (1975). Two biological pathways control the level of carbonyl compounds in the final product - the formation of aldehydes from the oxoacid pools and the enzymatic removal of wort carbonyls by the brewer's yeast.

Higher alcohols and the corresponding aldehydes are formed partly by anabolic processes from the main carbon source and partly through the catabolic pathway from exogenous amino acids. In addition, aldehydes produced during fermentation, mashing and boiling are known to be potential substrates for aldehyde dehydrogenases or reductases. Peppard *et al*., *J*. *Inst. Brew. 87*:386-390 (1981). However, recent studies have indicated that aldehyde-reducing systems are be more complex than previously assumed. See Collins *et al., Proc. Congr. Eur. Brew. Conv. 23*:409-416 (1991); Kronlof *et al*., *Proc. Cong. Eur. Brew. Conv. 22*:355-362(1989). It is now recognized that many enzymatic systems are involved in the reduction of the carbonyl compounds into higher alcohols, and that each system probably operates with varying activities during the course of the fermentation process (Debourg *et al*., *J. Am. Soc. Brew. Chem. 52*(3):100-106 (1994). For example, carbonyl compounds, particularly unsaturated carbonyls, are not stable. Such compounds are decomposed to shorter chains, which are subject to aldol condensation.

Unsaturated aldehydes, notably trans-2-nonenal, and related compounds involved in the oxidation of long-chain fatty acids have long been associated with stale flavor in beer. *See*, *e.g.*, Debourg *et al*., *supra,* and U.S. Patent No. 4,110,480. It is well known that enzyme mediated oxidation of unsaturated fatty acids, such as linoleic acid, followed by the subsequent oxidative or non-oxidative scission of the carbon chain, will produce flavor-active compounds having carbon lengths of 6 to 12. Therefore, those attempting to stabilize fermented malt beverage flavor have, in some cases, focused on modifying the lipids involved in the brewing process. However, in beer, the lipids are derived from malt in various forms including simple lipids (fatty acids, triglycerides and other neutral lipids), complex lipids (glycolipids and phospholipids) and bound lipids such as those bound with starch grains.

Numerous methods have been attempted to remove lipids from the raw materials, including (1) removal of the germ of the grain, which contains a significant portion of lipids found in the raw material cereals (polishing), (2) removal of lipids from the raw material cereals by ethanol extraction, (3) pretreatment of the raw material cereal grains with a lipid decomposing enzyme (Japanese Patent Examined Publ. No. 22478/1973, Japanese Patent Unexamined Publ. No. 55069/1987), and (4) removal of lipids by special filtration-separation (U.S. Pat. No. 5,460,836). However, not all lipids have an adverse effect, i.e., the balance of these forms of lipids subtly affects the beer quality and the efficiency of beer brewing process. Thus, even after years of study, it remains unknown what balance is appropriate, or how altering the total lipid content will affect the stability of flavor in the stored, finished product.

Another recognized technique for stabilizing beer against oxidation is to add an oxygen scavenger, such as sulfur dioxide, usually in the form of bisulfite, to the beer. Sulfur dioxide is produced by yeast during fermentation and will combine with carbonyls to form bisulfite addition components that are hydrophilic, and thus less volatile. However, although effective, increasing the concentration of SO₂, naturally or artificially, may be commercially unacceptable. In the United States, for example, SO₂ is limited by law to less than 10 ppm, and even those low levels product undesirable and sulfury aromas in some beers; while in other countries, such as Germany, prohibit any addition of exogenous SO₂.

Even if permitted, the addition of bisulfite, which works by binding to aldehydes, is not a panacea. Beer is a complex product, comprising many, many different aldehydes (notably acetaldehyde, a normal by-product of fermentation), hence the action of a sulfite additive is often muted. The addition of other oxygen scavengers has also been tried, but with little effect on the long-term stability of the flavor in the fermented malt beverage.

The addition of enzyme mixtures, including an oxidase, a catalase and a superoxidase dismutase to inhibit the auto oxidation of the components of beer is described in EP 0207039. JP 03065173 discloses a method for regenerating fresh sake with fresh fragrance by passing old sake over immobilised yeast and immobilised alcohol acid transferase active yeast.

In light of all of the prior art and years of research, however, beer flavor still goes stale. Thus, it is clear that until the present invention, there remained a long-felt need in the art for a reliable method of stabilizing the flavor of fermented malt beverages, which has the following characteristics: (1) will not significantly alter the desirable fresh flavor of the finished product, (2) will not significantly diminish the efficiency of the brewing process, (3) violates no law or regulation regarding the addition of additives or preservatives, and (4) is not dependent on maintaining specific environmental conditions for the transportation and storage of the packaged product.

The present inventors have developed an entirely new method for stabilizing fermented malt flavor by focussing on an aspect of the brewing reaction not previously considered in the prior art. The present invention demonstrates that fermented malt flavors may be stabilized by the use of inhibitors, blockers or reducing agents of Maillard reaction intermediates, such as the NADPH-dependent enzyme 3-deoxyglucosone reductase, or aminoguanidine. Such enzymes have been isolated and used previously to inhibit the maillard reaction. Liang *et al, Biosci*. *Biotech. Biochem 56(7): 1074-1078* 1992 describe the isolation and characterisation of a porcine liver enzyme that reduces 3-deoxyglucosone in an NADPH- dependent reaction. This enzyme was identified as 2-oxoaldelyde reductase. Japanese patent No. 02046285 discloses the use of plant derived 2-oxoaldehyde reductase to inhibit the Maillard reaction by acting on 3-deoxyglucosone.

In order to evaluate flavor stability, the inventors found it essential to have a sensitive, quick and reproducible method by which changes in the flavor of the beer could be analyzed. Sensory testing has been the traditional means available for assessing the organoleptic quality of beer. Taste testing, although sensitive, suffers from human limitations, such as personal bias and the tendency to make comparative (subjective) rather than objective evaluations (Mathews *et al., Trends in Food Science & Technol.* 4:89-91 (1990)). The Institute of Brewing Technology began using high performance liquid chromatography (HPLC) analyses according to e.g., Greenhoff and *Wheeler, J. Inst. Brew.* 86:35 (1981); Strating and Drost, Dev. in Food Sci. 17:109-121 (1988). Improved methods utilizing purge and trap techniques, gas chromatography, and mass selective detection using the SIM technique were applied to establish higher capacity and better separation, determination and identification. See, e.g*.*, Narziß et al., *MBAA Tech. Q.* 30:48-53 (1993). However, objective measurements of a particular quality parameter are meaningless unless they are correlated to the human response to the beverage as a whole when it is purchased and consumed under normal conditions.

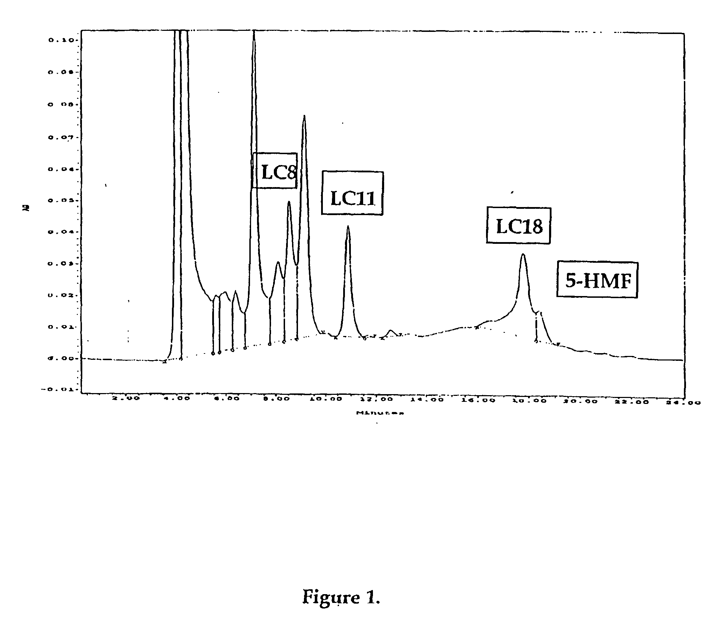

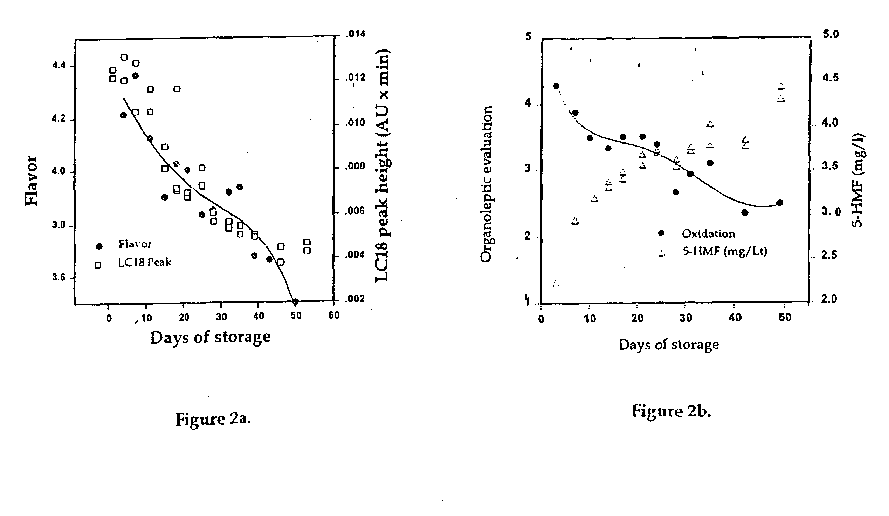

Thus, the present inventors developed a system by which the organoleptic deterioration of beer could be evaluated by analytical indices providing a series of compounds (see Figure 1) representing a reproducible continuum of fresh through deteriorated (stale) forms. These analytical indices were then related to organoleptic evaluations, as demonstrated in Figures 2a and 2b, to provide a correlation between objective and organoleptid measures of flavor freshness. Bravo *et al*., *IBTC Technical Consortium Meeting* #35, Salzburg, Austria, September 1993; Bravo *et al., IBTC Technical Consortium Meeting #36*, Caracas, Venezuela, November 1994. These compounds participate in the reactions involved in the beer staling process (substrates, intermediates or final products), but do not necessarily produce the stale flavor. These analytical indices are relatively easy to detect and show a significant change in their relative peak areas during the aging process (see Figures 2a and 2b).

The concentration of furfural, 5-methylfurfuryl, 2-acetylfuran and 5-hydroxymethylfurfural are useful indices for measuring heat damage in beer. For example, in an effort to establish a "quality deterioration test," methods have been developed for detecting furfural and 5-methylfurfuryl in fruit juices during storage. Harayama *et al*., *Agric. Biol.* Chem. *55*:393-398 (1991) found by multivariate analysis of off-flavor in head-space volatiles formed during the storage of beer, that certain furfural compounds were a valuable index for measuring a particular cardboard flavor in the beer. Grongvist *et al*., *EBC Cong.* 421-428 (1993), using gas chromatography to measure carbonyl compounds present during beer production and aging, found that the concentration of furfural was significantly increased during aging.

### SUMMARY OF THE INVENTION

The present inventors, deducing that the products formed during the Maillard reaction could be used as indices of beer aging, developed a method (using indices measured by a combination of capillary electrophoresis and HPLC techniques) to reliably monitor flavor stability and the organoleptic effect of aging on beer (Bravo *et al., IBTC Technical Consortium Meeting #35,* Salzburg, Austria, September 1993; Bravo *et al*., *IBTC Technical Consortium Meeting #36,* Caracas, Venezuela, November 1994). By utilizing the method for the detection of the relevant chemical indices, the present inventors developed a novel system, significantly advanced over those described and used heretofore, for dependably and efficiently assessing the degree of beer freshness, and for determining the storage conditions (time and temperature) of a beer exposed to a previously unknown environment. Furthermore, the present inventors have utilized these analytical systems to develop methods for improving the flavor stability of malt beverages such as beer, and for producing malt beverages by these methods.

In initial investigations designed to solve the above-described problems, it was discovered that by enzymatically regulating the production of certain intermediates of the Maillard reaction formed during the brewing process, a fermented malt beverage could be reliably produced having a refreshingly clean taste and enhanced flavor stability. The present inventors made further investigations based on this finding, and developed the present invention.

The present invention is directed to the production of malt beverages having improved flavor stability. The invention has particular utility in the production of fermented malt beverages such as beer, although the invention also may be advantageously used in the production of other malt flavored beverages. The invention is further directed to brewing methods for producing fermented malt beverages, such as beer, the beverages prepared by said method, and beverages having a substantially stabilized flavor. In particular, the present invention is directed to a method for stabilizing the flavor of a fermented malt beverage, most particularly a beer, by the addition of an oxoaldehyde reductase enzyme. Thus in the first aspect, the present invention provides a method for improving the stability of the flavor of an alcohol-containing fermented malt beverage comprising contacting said beverage with a flavour stabilising amount of a naturally occuring NADPH oxoaldehyde reductase produced by brewer's yeast.

The invention further relates to the use during the brewing process of oxoaldehyde reductase enzymes from naturally occurring sources, including those produced by yeasts, to stabilize the flavor of the resulting beer product and to produce a beer having a stable flavor.

The present invention also provides a method for enhancing the flavor stability of a malt beverage. In accordance with the present invention, this method is suitable for enhancing the flavor stability of a fermented malt-beverage, in particular, beer.

Thus, in the second aspect the present invention provides a method of producing an alcohol-containing fermented malt beverage, said method comprising the steps of producing a grain malt. Producing a wort from said grain malt, adding a flavor-stabilising amount of a naturally occurring NADPH-dependent oxoaldehyde reductase produced brewer's yeast, fermenting wort to produce a malt beverage processing said fermented malt beverage to produce a processed fermented malt beverage, and packaging said processed fermented malt beverage.

The present invention also provides extracts from a naturally occurring source (e.g., yeast), or a modified yeast or extract thereof, which will provide a sufficient amount of the necessary enzymes to block, inhibit or reduce the Maillard reaction intermediates (e.g., 3-deoxyglucosone), which results in the formation of the stale flavor in fermented malt beverages.

Still other objects and advantages of the present invention will be apparent from the following detailed description of the invention.

### BRIEF DESCRIPTION OF THE FIGURES

**Figure 1.** Chromatogram of a fresh beer showing the chemical indices of beer aging: LC8, LC11, LC18 and 5-HMF.

**Figure 2.**
a: Graph demonstrating changes in the intensity of LC18 peak height during the storage at 5°C and its correlation with flavor evaluation. LC18 is consumed at low temperatures and tends to disappear in time.
b: Graph demonstrating changes in the concentration of 5-HMF during the storage of beer at 28°C, and its inverse correlation with the oxidation degree.

**Figure 3.** Diagram of the proposed mechanism of formation of LC18 in beer, and its possible involvement in flavor deterioration. LC18 is a dicarbonyl compound precursor of 5-HMF which can also condensate with aminascids through the Strecker degradation to produce aldehydes and pyrroles or pyrazines (CE3).

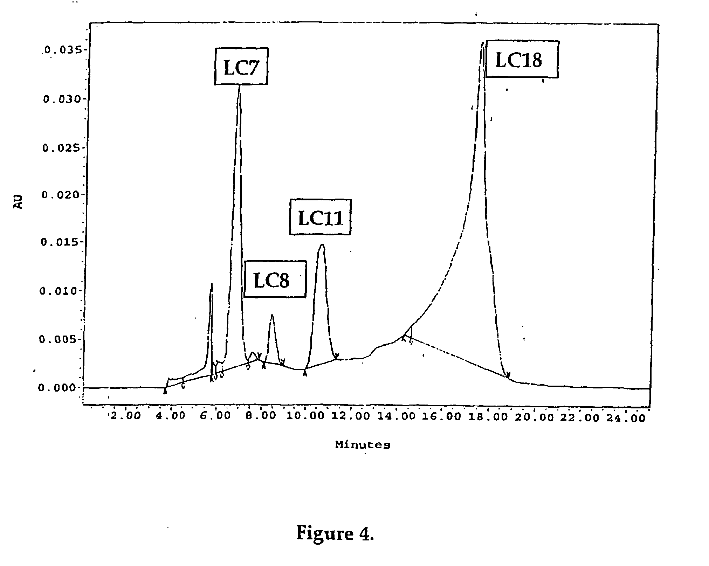

**Figure 4.** Chromatogram of a heat-treated glucose-glycine model system, consisting of 1 M glucose + 0.5 M glycine, after 3 hours of reaction at 90°C, demonstrating acquisition of the analytical indices of beer aging (LC8, LC11 and LC18) in a model system.

**Figure 5.** Composite chromatogram demonstrating the effect of the addition of 1,2-phenylendiamine to wort. A: wort. B: wort+ 1,2-phenylendiamine. The addition of 1,2-phenylendiamine causes a specific reduction in the LC18 peak.

**Figure 6.**
a: Bar graph demonstrating changes in the area of hydrophobic quinoxalines accompanying storage of beer at 5°C and 28°C for 15 days and at 60°C for 3 days.
b: Bar graph demonstrating changes in the area of hydrophilic quinoxalines accompanying storage of beer at 5°C and 28°C for 15 days and at 60°C for 3 days.

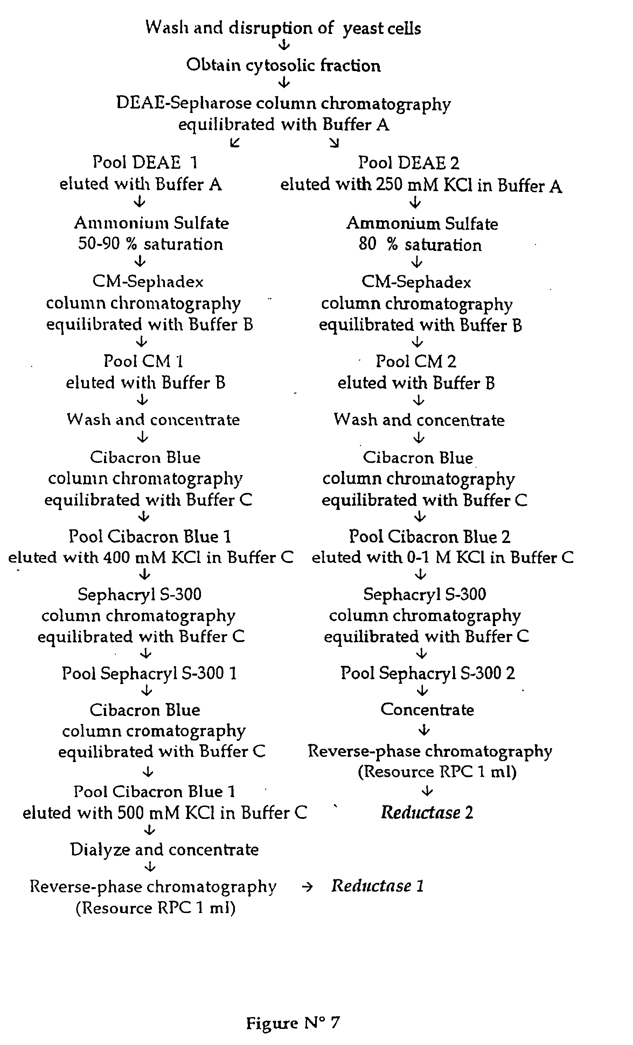

**Figure 7.** Scheme of reductase enzyme purification procedure. Buffer A: 25 mM potassium phosphate pH 7.5. Buffer B: 5 mM potassium phosphate pH 6.5. Buffer C: 25 mM potassium phosphate pH 7.0.

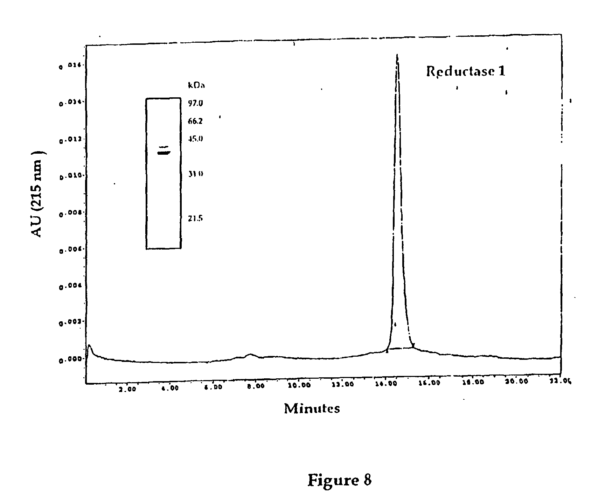

**Figure 8.** Elution profile of Reductase 1 on Sephacryl S-200 chromatography. Inset: SDS-polyacrylamide gel electrophoresis of Reductase 1. The gel was stained with Coomassie Brilliant Blue.

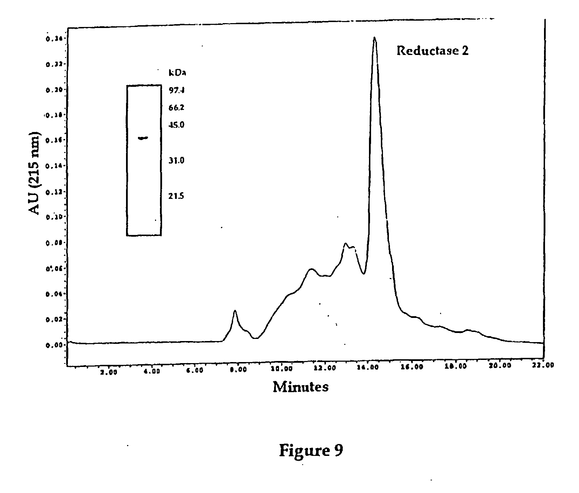

**Figure 9.** Elution profile of Reductase 2 on Sephacryl S-200 chromatography. Inset: SDS-polyacrylamide gel electrophoresis of Reductase 2. The gel was stained with Coomassie Brilliant Blue.

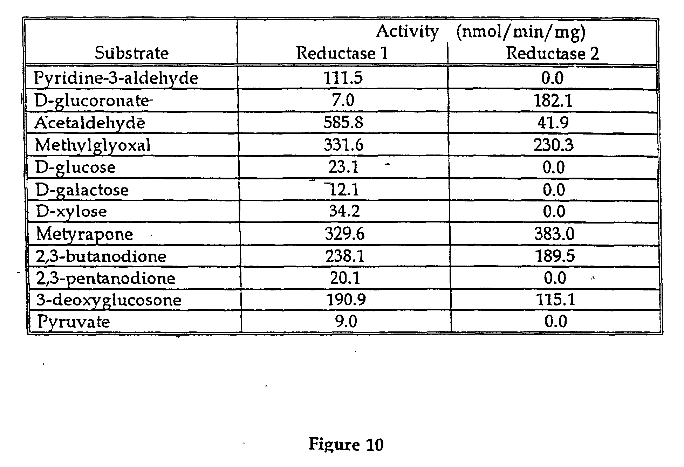

**Figure 10.** Substrate specificities of the Reductase 1 and Reductase 2 enzymes.

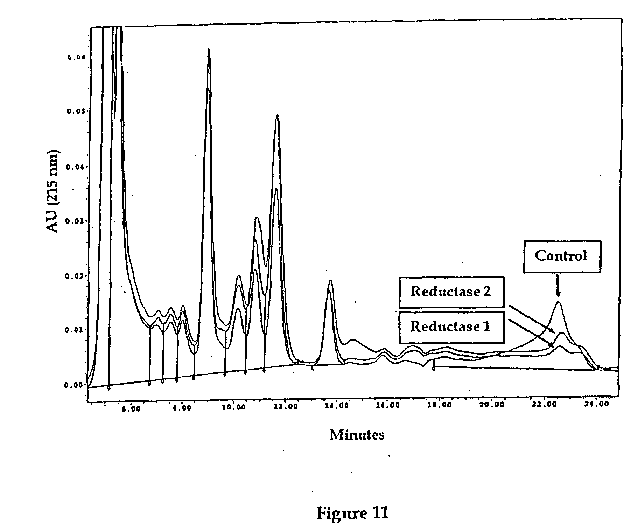

**Figure 11.** Composite chromatogram demonstrating the decrease in the LC18 peak in beer after addition of Reductase 1 and 2 isolated from brewer's yeast.

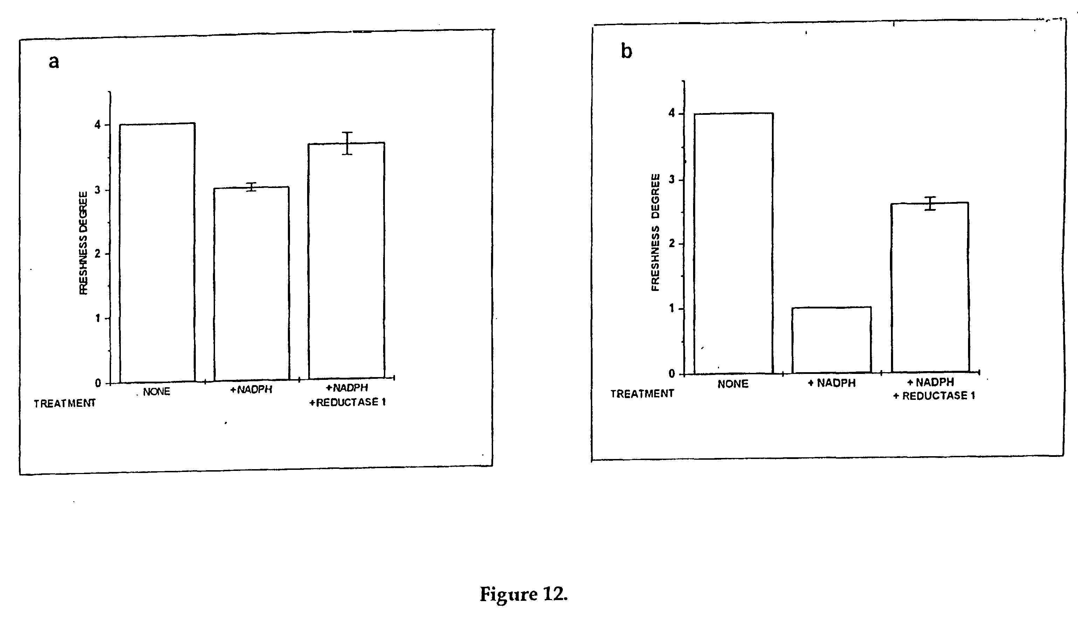

**Figure 12.** Bar graphs demonstrating organoleptically determined freshness degree of beers treated with Reductase 1. Beers were incubated with a mixture of buffer C, NADPH (control beers) and Reductase 1 (experimental beers) for 15 days at 28°C (panel a) or 3 days at 60°C (panel b).

### DETAILED DESCRIPTION OF THE INVENTION

### Definitions

Throughout this disclosure, various terms that are genetally understood by those of ordinary skill in the applicable arts are used. Several terms are used with specific meaning, however, and are meant as defined by the following:

As used herein, the term "malt" is meant to refer to any cereal grain, particularly barley, steeped in water until it is sprouted and used in brewing and distilling.

The term "mash" as used herein is defined as crushed malt or grain steeped in hot water to make wort.

The term "wort" as used herein is defined as the liquor run-off after extracting a prepared solid material, such as a cereal grain or malt, with hot water.

As used herein, the term "fermented malt beverage" is meant as any malt-flavored beverage produced by fermentation, such as beer or sake.

As used herein, the term "beer" is defined as an alcoholic beverage brewed from malt and hops. The term as used herein is meant to include ales, stouts, lagers, porters, malt liquors, low-calorie, low-alcohol and light brews, and the like.

### The Maillard Reaction

More than eighty years ago, Louis Maillard first investigated the reaction of reducing sugars with the free amino groups of amino acids and proteins. This complex reaction, termed the Maillard reaction, or non-enzymatic browning, is responsible for the aroma and taste in cooked or preserved foods. Specifically, it is know to be involved in the resulting color and aroma of fermented malt beverages, such as beer or sake.

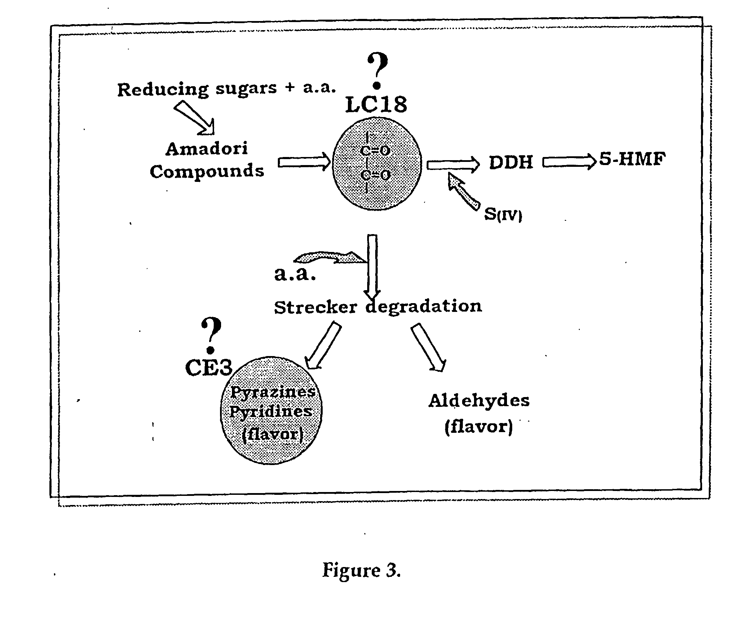

As diagrammed in Figure 3, the Maillard reaction is initiated by the reaction of primary amines (from amino acids, proteins and nucleic acids) with sugars to form imines (Schiff bases) which undergo further rearrangement to form the Amadori products, which are responsible for the browning and fluorescent process, which subsequently results in the formation of numerous advanced glycosylation end products. Broadly, the advanced glycosylation end products are termed α-carbonyl intermediates, including, for example, 1-deoxydiketoses and 3-deoxyaldoketoses. When the reduced sugar is glucose, as in the brewing of malt, one of the α-carbonyl intermediates is 3-deoxyglucosone.

Hundreds of compounds, including dextrins, polypeptides, alcohols, polyphenols, pyrrols, isohumulones, melanoids, fatty acids and aldehydes, as well as related precursors and intermediates, are involved during the brewing process in the Maillard reaction. For example, there are over 140 reductases and dehydrogenases in the super family of reductases involved in the Maillard reaction. Prior to the present invention, however, there was no suggestion in the prior art that by enzymatically regulating the production of a specific intermediate of the Maillard reaction, the flavor of beer could be effectively stabilized. In addition, the use of a specific reductase as a regulatory enzymatic processing aid in the production of beer has not heretofore been suggested. Historically, most assays used to test the flavor stability of beer have been purely subjective (*e.g*., classical panels of beer tasters) and have not been conducive to quantitation. It was therefore necessary for the present inventors to first develop a reliable, objective analytical assay to determine flavor stability of a sample, which could be used in addition to organoleptic evaluations, before new procedures could be implemented or additives characterized in terms of their effects on flavor stability.

### The Attributes of Fermented Malt Beverages

Malt beverages, especially beer, possess attributes readily discernable by the consumer. These attributes include foam, flavor and clarity. Of these, flavor is ultimately the most important characteristic to the consumer.

Flavor (purity) and after-taste (refreshing feeling) are typically measured within the industry as having one of the following five grades:
1: Taste is not very clean and after-taste has no refreshing feeling.
2: Taste is not clean and after-taste has almost no refreshing feeling.
3: Usual.
4: Taste is clean and after-taste has refreshing feeling.
5: Taste is very clean and after-taste has very refreshing feeling.

Flavor stability is typically evaluated in the stored packaged product (usually at a storage temperature of 40°C.) as having one of the following five grades:
1: Significantly staled.
2: Staled.
3: Usual.
4: Fresh.
5: Very fresh.

In addition, an increasing number of consumers desire an all-natural beer product which demonstrates the above qualifies yet is entirely free of artificial additives or supplements.

It is known in the art that the malted barley may be replaced in whole or in part by a so called "brewing adjunct." Suitable brewing adjuncts include maize, rice, sugar and various syrups. A brewing adjunct used in the production of a wort, such as maize, is usually crushed and a mash formed separately from the malt mash by adding enzymes. Prehydrolyzed products can be mixed with the malt mash, and syrups can be added to the wort at the time the wort is boiled as described above. The use of brewing adjuncts needs to be carefully controlled in order to produce beer of acceptable taste and color. The use of adjuncts made from maize, rice and other grains expands the brewing ingredients beyond the traditional ones listed above. Such an approach is, however, not possible in certain countries ― in Germany, for example, the Beer Purity Laws enacted in 1516 (the "Reinheitsgeböt") which limit brewing ingredients to barley malt, water, hops and yeast, are still followed.

Compounds added to the wort mixture prior to the primary fermentation step are termed "processing aids." On the other hand, compounds added to the wort mixture after the primary fermentation step are termed "additives." The difference between the two is significant because the use of additives is regulated, whereas the use of processing aids are not.

By the methods of the present invention, a flavor-stabilizing amount of at least one oxoaldehyde reductase enzyme is used as an additive to the fermented malt beverage. This enzyme additive provides enhanced stabilization of the flavor of the finished fermented malt beverage.

The oxoaldehyde reductase enzyme(s) may be added at any stage of the brewing process, including to the grain malt, to the wort prior to fermentation, to the fermented wort, to the fermented malt beverage prior to processing, or to the processed fermented malt beverage prior to packaging. Most preferably, the oxoaldehyde reductase enzyme is added to the wort prior to fermentation, to the fermented malt beverage prior to processing, or to the processed fermented malt beverage prior to packaging.

Preferably, the oxoaldehyde reductase enzymes are naturally occurring. The enzymes may be isolated using known protein extraction procedures from a number of sources, and may be purified as described below and then added to the fermentation beverage as a processing aid and/or as an additive. In this scheme, the reductase enzymes may be added to the fermentation process continuously or as a single injection. The methods of the present invention may be carried out using either full-length enzymes, or biologically active fragments thereof. As an alternative form of the enzyme, certain synthetically formulated, full-length or attenuated oxoaldehyde reductases can be used in plane of the naturally occurring enzymes to stabilize the flavor of the fermented malt product, so long as the alternative enzyme form possesses the biological activity of the naturally occurring oxoaldehyde reductase enzyme.

Preferably, the oxoaldehyde reductase enzyme isolated and purified by, or used in, the methods of the present invention is an NADPH-dependent enzyme. Most preferably, the oxoaldehyde reductase enzyme is 3-deoxyglucosone reductase.

Naturally occurring oxoaldehyde reductase enzymes are preferably isolated from yeast cells using routine protein extraction procedures as set forth in Example 1 below, or from animal or vegetable sources. Preferred as sources of naturally occurring oxoaldehyde reductase enzymes are yeast cells, including brewer's or pitching yeasts, *e.g*., of the genus *Saccharomyces*, most preferably of the species *Saccharomyces cerevesias.*

The oxoaldehyde reductase enzymes isolated from these natural sources may be purified by protein purification techniques that are routine to those of ordinary skill in the art. Preferably, the enzymes are purified by a combination of "salting out" and chromatographic purification such as liquid chromatography, HPLC, FPLC, affinity chromatography, ion exchange chromatography, size exclusion chromatography, and immunoaffinity chromatography. Most preferably, the purified enzymes are purified by a combination of ammonium sulfate precipitation and HPLC or FPLC purification. These purified oxoaldehyde reductase enzymes may then be added to the product, in flavor-stabilizing amounts as described above, to enhance the flavor stability of the fermented malt beverage.

In an alternative embodiment, crude preparations of oxoaldehyde reductase enzymes may be added to the product without purification. Crude preparations encompassed by this embodiment of the invention include extracts or digests of naturally occurring yeast, animal or vegetable sources. Preferable is an extract or enzymatic digest of naturally occurring or genetically modified (as described below) yeast cells, including cells of the genus *Saccharomyces*, and most preferably of the species *Saccharomyces cerevisiae.* Methods for preparing such extracts or enzymatic digests are well-described in the microbiological literature (see, *e.g.*, Difco Manual, Difco, Inc., Norwood, Massachusetts).

In another alternative embodiment, sources (such as yeasts) capable of producing oxoaldehyde reductase enzymes may be added *per se* in an amount sufficient to produce an effective amount of the oxoaldehyde reductase *in situ* to stabilize the flavor of the finished product. These sources may also be used to prepare a crude preparation, preferably an extract or enzymatic digest, comprising enhanced amounts of an oxoaldehyde reductase enzyme, which is then used as described above to stablize the flavor of a fermented malt beverage. Preferably, yeasts of the genus *Saccharomyces*, and most preferably of the species *Saccharomyces cerevisiae*, are used in this embodiment.

In yet another embodiment, yeast cells, preferably of the genus *Saccharomyces,* and most preferably of the species *Saccharomyces cerevisiae*, are genetically modified to produce enhanced amounts of oxoaldehyde reductase relative to their parental or wild-type strains. Methods for genetically modifying yeast cells and other microorganisms are well-known and routine to those of ordinary skill in the art (see, *e.g*., Watson. J.D., *et al., in:* Recombinant DNA, 2nd Ed., New York: Scientific American Books, pp. 235-253 (1992)). These genetically modified yeasts provide a readily available source of the reductase (as a crude or purified preparation) to be added during the fermentation process. In the alternative, as in the previous embodiments, the genetically modified yeast having enhanced oxoaldehyde reductase expression may be added *per se* in an amount sufficient to provide *in situ* stabilization of the flavor in the finished malt product.

If added *per se*, yeast cells capable of producing oxoaldehyde reductase may be immobilized onto a solid-phase carrier, at a density sufficient to provide enough enzymatic activity to substantially stabilize the flavor of the finished fermented malt beverage. The carrier is important in terms of providing an adequate environment for yeast growth and contact with the aqueous substrate. Materials used to provide a carrier may include, *e.g*., alginate beads (providing a gel-like carrier), latex particles, or DEAE-cellulose granules. The yeast cells may be immobilized onto a carrier and cultured according to any means known in the art (see, *e.g.*, U.S. Patent No. 5,079,011).

The optimal amounts of oxoaldehyde reductase necessary to stabilize the flavor of the finished malt product were determined using the analytical methods set forth in the Examples below. According to these methods, the optimal concentration ranges for oxoaldehyde reductase enzymes in the finished malt beverage are about 5-500 units/ml, preferably about 10-250 units/ml, more preferably about 25-100 units/ml, and most preferably about 50 units/ml. As used herein, one unit of enzyme is defined as the amount of enzyme that catalyzes the oxidation of 1 micromole of NADPH per minute at 25°C. It should be noted that while these ranges are described in terms of a particular oxoaldehyde NADPH-dependent reductase, the methods of the present invention contemplate the addition of other flavor-stabilizing proteins simultaneously, sequentially, or by a single injection of two or more pre-blended components.

Having now described the present invention in detail, the same will be more clearly understood by reference to the following examples, which are included herewith for purposes of illustration only and are not intended to be limiting of the invention.

### Examples

### Materials and Methods

The following materials and methods were generally used in the Examples.

### Organoleptic Testing.

Organoleptic testing is designed to give an indication of the stability of bottled beer, as determined by subjective methods (*e.g*., "taste testing"). In this approach, filtered, enzyme-treated beer is packaged in standard 275 ml bottles, and samples are subjected to an alternating cooling (0°C for 24 hours) and heating (40°C for 24 hours) cycle. The flavor of the beer is then evaluated organoleptically by skilled tasters. A control sample of beer not treated with enzyme is temperature-cycled at the same time to provide a standard. The flavor indices of these treated and untreated beers are then compared to determine the improved stability achieved by treating beer with an oxoaldehyde reductase enzyme. The results of this organoleptic testing are then compared to those obtained by chromatographic measurements of the chemical indices of flavor described below.

### Analysis of LC18 and 5-HMF.

Analysis of the chemical indices LC18 and 5-HMF was performed by liquid chromatography, using a Waters HPLC system which consisted of a 600 pump, Wisp 717 autosampler, Millennium 2010 Chromatography Manager v 2.1. Separation was carried out in an Aminex HPX-87H column 300 x 7.8 mm, 9 µm held at 55°C. Elution was monitored with a Waters 991 Photodiode Away Detector (200 nm - 300 nm) and the quantitation of 5-HMF and LC18 peak was carried out at 283 nm. For analysis, 50 µl of degassed beer was injected in duplicate samples and eluted with 0.05 M H₃SO₄ over 25 min at a flow rate of 1.0 ml/min. Quantitation of 5-HMF was performed using an external calibration curve of the respective pure compounds (Sigma; Saint Louis, Missouri).

### Analysis of CE3.

All samples of beer were degassed in an ultrasonic bath before injection and analyzed in duplicate. Analyses were performed on a 270A-HT Applied Biosystems Capillary Electrophoresis System. An untreated fused silica capillary of 50 µm internal diameter and 72 cm length (50 cm to the detector) was used in all separations. Samples were vacuum-injected for 3.5 seconds, and electrophoretic separations were carried out in 20 mM sodium citrate buffer, pH 2.5, at a voltage of 15 kV for 20 minutes. Detection was performed at 200 nm. Data acquisition and processing was accomplished using a Model 600 Data Analysis System Software (Applied Biosystems) for Macintosh.

### Derivatization of dicarbonylic compounds with 1,2-phenytendiamine and determination of quinoxalines by HPLC.

A fixed volume (2.2 ml) of 5% 1,2-phenylendiamine (OPD) in methanol was added to a bottle of beer (222 ml) that was then recapped and kept at 20°C for 12 hours. After 12 hours of reaction, 25 ml of sample were extracted with chloroform (3 x 8 ml). The chloroform organic phase was removed by centrifugation at 3000 rpm for 10 min, collected, washed with 0.1 M HCl (3 x 8 ml) in order to remove the unreacted 1,2-phenylendiamine, and semi-dried with magnesium sulfate. The semi-dried organic phase, which contained the hydrophobic quinoxaline derivatives, was then rotavapped to dryness, and the residue resuspended in 250 µl of acetonitrile, and diluted 1/10 (50% solvent A and 50% solvent B) before chromatographic analysis. Hydrophobic quinoxalines were analyzed using Method I (see below). The aqueous phase, containing hydrophilic quinoxalines, was injected directly and analyzed using Method II (see below).

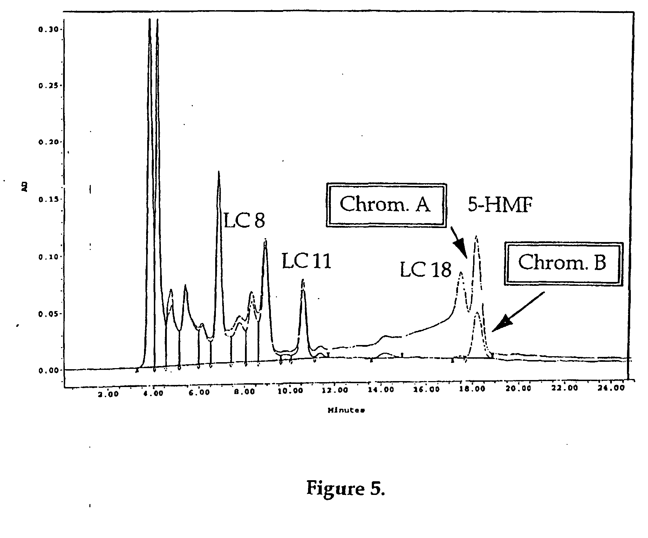

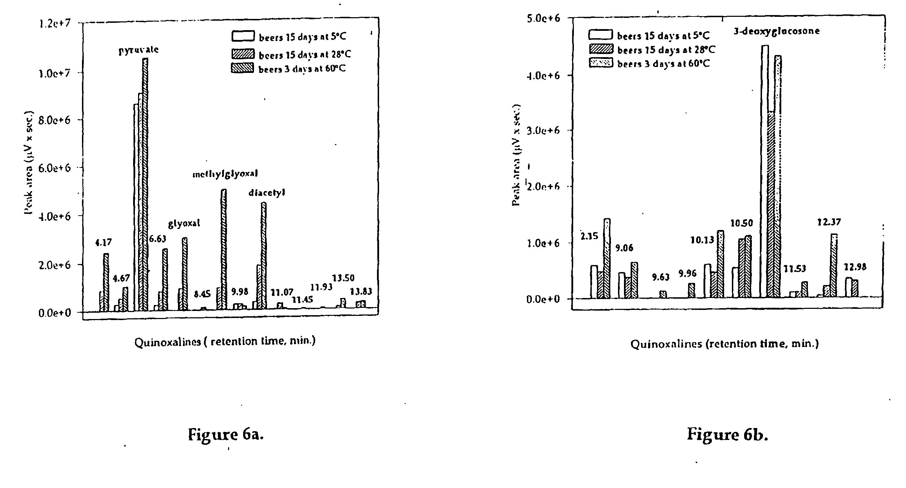

Chromatographic conditions were as follows: a Nova-Pak C18 (Waters) column 3.9 x 150 mm, 4 µm was used. The mobile phase was: solvent A - 95% water (Milli-Q) and 5% acetonitrile; solvent B - 90% acetonitrile and 10% water; flow rate 0.7 ml/min. Elution was monitored with a Waters 991 Photodiode Array Detector (200 nm - 360 nm). Typical results are shown in Figures 5 and 6.

Methods I and II are as follows:

| **Method I** | | |
|---|---|---|
| Time (min) | % Solvent A | % Solvent B |
| 0 | 85 | 15 |
| 12 | 60 | 40 |
| 20 | 100 | 0 |

| **Method II** | | |
|---|---|---|
| Time (min) | % Solvent A | % Solvent B |
| 0 0 | 100 | 0 |
| 3 | 100 | 0 |
| 10 | 75 | 25 |
| 15 | 75 | 25 |

### Example 1: Purification of NADPH-dependent 2-axoaldehyde reductase from brewer's yeast.

Brewer's yeasts (Polar, Caracas, Venezuela) for pitching were washed twice with 25 mM potassium phosphate buffer pH 7.5 (buffer A), suspended in the same buffer and disrupted by glass beads (0.5 mm diameter) in a Disintegrator-S (IMA) at 3000 rpm for 10 minutes. The cell homogenates were centrifuged at 10000xg for 40 minutes, and the supernatant (cytosolic fraction) was used for the purification of NADPH-dependent oxoaldehyde reductase activities.

The enzymes were purified by successive column chromatographies on a FPLC System (Pharmacia), as summarized in Figure 7. All the procedures were carried out at 5°C.

The cytosolic fraction was applied to a DEAE-Sepharose column previously equilibrated with buffer A. The column was first washed with the same buffer and then with the buffer A containing 250 mM and 500 mM KCl, and the enzyme activity was eluted as two peaks, The first peak (Reductase 1) was eluted with the washing buffer, and the second (Reductase 2) was eluted with the buffer containing 250 mM KCl. Both fractions were pooled separately and precipitated by the addition of ammonium sulfate. Reductase 1 was precipitated with ammonium sulfate to give 50% saturation, the mixture was stirred for 30 minutes at 5°C and then centrifuged for 20 minutes at 4360 xg. The resulting supernatant was brought up to a saturation of 90% ammonium sulfate, stirred for 30 minutes, and centrifuged for 20 minutes at 4360 xg. Reductase 2 was precipitated with ammonium sulfate to give 80 % saturation and processed as described above. The pellets obtained after this centrifugation were resuspended, separately, in a minimal amount of 5 mM potassium phosphate pH 6.5 (buffer B) and dialyzed overnight against the same buffer.

The dialyzed enzyme fractions were applied separately on identical CM-Sephadex columns previously equilibrated with buffer B. In both cases, reductase activity did not interact with the resine and the proteins were eluted with the equilibration buffer. Fractions with reductase activity were pooled and concentrated by ultrafiltration with an Amicon YM-10 membrane.

The pooled enzyme fractions were then adsorbed separately to identical Cibacron Blue columns previously equilibrated with 25 mM potassium phosphate pH 7.0 (buffer C). Reductase 1 was eluted with the buffer containing 400 mM KCl, whereas Reductase 2 was eluted with a 0-1 M KCl linear gradient in buffer C.

The fractions showing reductase activity were pooled separately and concentrated to a 2 ml volume as described previously, and then applied to a Sephacryl S-300 column equilibrated with buffer C.

Reductase 1 was further purified by means of an additional Cibacron Blue column equilibrated with buffer C. The column was washed with the same buffer and the proteins were eluted with the buffer C containing 500 mM KCl.

As a last purification step, both enzyme preparations (Reductase 1 and Reductase 2) were subjected to a preparative reverse-phase column (Pharmacia Biotech Resource RPC 1 ml) connected to a Waters LC Module I plus HPLC system. The protein elution was monitored by measuring the absorbance at 215 nm. The purified enzymes were freeze-dried and stored at -70°C.

The activities of the isolated and purified oxoaldehyde reductase enzymes were determined in a mixture containing 9 mM methylglyoxal, 0.1 mM NADPH, 20 mM potassium phosphate buffer (pH 7.0), and the fraction enzyme (8 µg approximately) in a total volume of 0.5 ml. The reaction was monitored at 340 nm. All assays were performed at 25°C. One unit of the enzyme was defined as the amount of enzyme that catalyzes the oxidation of 1 µmol of NADPH per minute at 25°C.

### Example 2: Reductase characterization

Chromatographic fractions from Example 1 which showed enzymatic activity were used for the estimation of molecular weight by both gel filtration chromatography and 12.5% polyacrylamide gel electrophoresis containing sodium dodecylsulfate (SDS-PAGE) as described by Weber and Osborn *(J. Biol. Chem 244*:4406-4412 (1969)). Protein was determined by the method of Lowry *et al.* (*J. Biol. Chem. 193*:265-275 (1951)), using bovine serum albumin as a standard.

Analytical gel filtration in HPLC was performed on a Sephacryl S-200 column (Waters), which was equilibrated and eluted with buffer C. Both enzymes eluted as single peaks; the molecular weight of native Reductase 1, as determined by this method, was shown to be 86 kDa. However, the analysis on SDS-PAGE of Reductase 1 showed two major bands of molecular weight 44 and 47 kDa (Figure 8), whereas a single band of 39.5 kDa was seen for Reductase 2 (Figure 9).

### Example 3: Substrate specificity assays

Various carbonyl compounds were assayed as substrates for the isolated and purified oxoaldehyde reductase enzymes. As shown in Figure 10, both Reductase 1 and Reductase 2 acted on 2-oxoaldehydes such as methylglyoxal and 3-deoxyglucosone. Reductase 1 showed a higher activity than Reductase 2 on compounds with a single keto or aldo group such as acetaldehyde and pyridine-3-aldehyde. Glucuronate was found to be a better substrate for Reductase 2 than for Reductase 1, whereas metyrapone was an acceptable substrate for both enzymes. Both reductases showed little or no effect on the assayed aldoses (glucose, galactose and xylose). It is noteworthy that neither enzyme, showed any appreciable activity on pyruvate.

These results demonstrate that Reductase 1 and Reductase 2 are chemically and kinetically distinguishable.

### Example 4: Effect of the reductases on LC18

In order to determine the effect of both reductases on the intensity of the LC18 peak, a 1 ml mixture of fresh beer, 25 mM potassium phosphate buffer (pH 7.0), 0.1 mM NADPH and the required volume of enzyme to obtain a final concentration in the solution of 50 units/ml of enzyme was incubated at 25°C for 30 minutes. After the incubation, the treated beer was analyzed on an Aminex HPX-87H column connected to a Waters HPLC System under the conditions described above.

As demonstrated in Figure 11, treatment of beer with Reductase 1 or Reductase 2 caused a significant decrease in the area of the LC18 peak (arrows), relative to that in an untreated control beer. Treatment of beer with Reductase 1 induced a larger decrease in the LC18 peak than did treatment with Reductase 2, perhaps reflecting the higher specific activity of the former for various single keto- and single aldo-carbonyl substrates as shown in Figure 10. These results demonstrate that treatment with either Reductase 1 or Reductase 2, and preferably with Reductase 1, can reduce the formation of stale flavor indices such as LC18 in fresh beer.

### Example 5: Flavor evaluation

For sensory evaluations of beer flavor, we used a panel of six trained tasters. Each participant was asked to compare flavor profiles and determine the presence or absence of flavor components, associated with freshness degree of beer in the following samples: 1) fresh beer at 5°C; 2) control beer at 28°C; and 3) beer with added Reductase 1 at 28°C. The scale used to report the freshness degree of beer was from "1" to "5" (with "5" indicating the freshest taste).

Beers were prepared as follows:
1) Control beers: 10 ml of beer were taken out of each six bottles of 222 ml of pasteurized, fresh beer under a CO₂ current. This volume was replaced with 6 ml of buffer C and 4 ml of 3 mM NADPH, and the bottles were then recapped. Three bottles were stored at 5°C for 15 days and other at 28°C for 15 days.
2) Experimental beers: 10 ml of beer were taken out of each of three bottles of 222 ml of pasteurized, fresh beer under a CO₂ current, and this volume was replaced with 5.4 ml of buffer A, 4 ml of 3 mM NADPH and 0.6 ml of Reductase 1. The bottles were recapped and stored at 28°C for 15 days.

The fresh, control and experimental beers were then subjected to evaluation by the panel of tasters. As shown in Figure 12, these flavor evaluation tests demonstrated a significant increase in freshness degree in beers containing reductase 1, compared with control beers at 28°C. Together with those for chromatographic testing above, these results indicate that treatment of beer with Reductase 1 stabilizes the flavor of the beer.

## Claims

1. A method for improving the stability of the flavour of an alcohol-containing fermented malt beverage comprising contacting said beverage with a flavour stabilizing amount of a naturally occurring NADPH-dependent oxoaldehyde reductase produced by brewer's yeast.

2. The method of claim 1, wherein the fermented malt beverage is beer.

3. The method of claim 1 or claim 2 wherein the enzyme is 3-deoxyglucosone reductase.

4. The method of any one of claims 1-3, wherein the yeast is of the genus *Saccharomyces.*

5. The method of claim 4, wherein the yeast is of the species *Saccharomyces cerevisiae.*

6. A method of producing an alcohol-containing fermented malt beverage, said method comprising the steps of producing a grain malt, producing a wort from said grain malt, adding a flavour-stabilising amount of a naturally occurring NADPH-dependent oxoaldehyde reductase produced by brewer's yeast, fermenting wort to produce a fermented malt beverage, processing said fermented malt beverage to produce a processed fermented malt beverage, and packaging said processed fermented malt beverage.

7. The method of claim 6, wherein said enzyme is added to said wort prior to said fermentation.

8. The method of claim 6 wherein said enzyme is added to said fermented malt beverage prior to said processing step.

9. The method of claim 6 wherein said enzyme is added to said fermented malt beverage prior to said packaging step.

## Patentansprüche

1. Verfahren zum Verbessern der Stabilität des Geschmacks eines alkoholhaltigen, vergorenen Malzgetränkes, gemäß welchem das Getränk mit einer geschmacks-stabilisierenden Menge einer von Bierhefe erzeugten, natürlich vorkommenden, NADPH-abhängigen Oxoaldehydreductase in Kontakt gebracht wird.

2. Verfahren nach Anspruch 1, wobei das vergorene Malzgetränk Bier ist.

3. Verfahren nach Anspruch 1 oder Anspruch 2, wobei das Enzym 3-Desoxyglucosonreductase ist.

4. Verfahren nach einem der Ansprüche 1 bis 3, wobei die Hefe solche der Gattung *Saccharomyces* ist.

5. Verfahren nach Anspruch 4, wobei die Hefe solche der Spezies *Saccharomyces cerevisiae* ist.

6. Verfahren zum Herstellen eines alkoholhaltigen, vergorenen Malzgetränkes, wobei das Verfahren die Schritte des Herstellens eines Getreidemalzes, Herstellens einer Würze aus dem Getreidemalz, Zugebens einer geschmacks-stabilisierenden Menge einer von Bierhefe erzeugten, natürlich vorkommenden, NADPH-abhängigen Oxoaldehydreductase, Vergärens von Würze, um ein vergorenes Malzgetränk herzustellen, Verarbeitens des vergorenen Malzgetränkes, um ein verarbeitetes, vergorenes Malzgetränk herzustellen, und Verpackens des verarbeiteten, vergorenen Malzgetränkes beinhaltet.

7. Verfahren nach Anspruch 6, wobei das Enzym vor der Vergärung zu der Würze gegeben wird.

8. Verfahren nach Anspruch 6, wobei das Enzym vor dem Verarbeitungsschritt zu dem vergorenen Malzgetränk gegeben wird.

9. Verfahren nach Anspruch 6, wobei das Enzym vor dem Verpackungsschritt zu dem vergorenen Malzgetränk gegeben wird.

## Revendications

1. Procédé d'amélioration de la stabilité d'un arôme d'une boisson à base de malt fermenté contenant de l'alcool comprenant la mise en contact de ladite boisson avec une quantité stabilisant l'arôme d'une oxoaldéhyde réductase dépendant de NADPH, apparaissant naturellement, produite par la levure de brasserie.

2. Procédé selon la revendication 1, dans lequel la boisson à base de malt fermenté est de la bière.

3. Procédé selon la revendication 1 ou la revendication 2, dans lequel l'enzyme est la 3-désoxyglucosone réductase.

4. Procédé selon l'une quelconque des revendications 1-3, dans lequel la levure est du genre Saccharomyces.

5. Procédé selon la revendication 4, dans lequel la levure est de l'espèce Saccharomyces cerevisiae.

6. Procédé de production d'une boisson à base de malt fermenté contenant de l'alcool, ledit procédé comprenant les étapes de production de malt en grain, de production de moût à partir dudit malt en grain, d'addition d'une quantité stabilisant l'arôme, d'une oxoaldéhyde réductase dépendant de NADPH apparaissant naturellement, produite par la levure de brasserie, de fermentation du moût pour produire une boisson à base de malt fermenté, de traitement de ladite boisson à base de malt fermenté pour produire une boisson à base de malt fermenté traitée, et d'emballage de ladite boisson à base de malt fermenté traitée.

7. Procédé selon la revendication 6, dans lequel ladite enzyme est ajoutée audit moût avant ladite fermentation.

8. Procédé selon la revendication 6, dans lequel ladite enzyme est ajoutée à ladite boisson à base de malt fermenté avant ladite étape de traitement.

9. Procédé selon la revendication 6, dans lequel ladite enzyme est ajoutée à ladite boisson à base de malt fermenté avant ladite étape d'emballage.
